# EUROPEAN PATENT APPLICATION

(11) **EP 4 608 014 A1**
(43) Date of publication of application: **27.08.2025**
(21) Application number: 23879771.6
(22) Date of filing: 17.10.2023
(51) Int. Cl.: H04W 36/28, H04W 72/0457

(54) **TERMINAL, WIRELESS COMMUNICATION METHOD, AND BASE STATION**

(30) Priority: 17.10.2022 JP 2022166494
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2023/037482
(87) International publication number: WO 2024/085128

(57) **Abstract**

A terminal according to one aspect of the present disclosure includes a receiving section that receives a configuration indicating whether a serving cell may become a candidate cell for layer 1/layer 2 (L1/L2) inter-cell mobility, and a control section that controls switch of the serving cell, based on the configuration. According to one aspect of the present disclosure, configuration/processing at the time of cell switch can be appropriately performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)", "5G+ (plus)", "6th generation mobile communication system (6G)", "New Radio (NR)", "3GPP Rel. 15 (or later versions)", and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a radio communication system, it is studied that one or a plurality of cells/transmission/reception points (TRPs) (multi-TRP (MTRP)) perform downlink (DL) transmission to a terminal (a user terminal, a User Equipment (UE)).

Incidentally, it is studied that cell switch is performed using layer 1/layer 2 inter-cell mobility (L1/L2 inter-cell mobility) when the multi-TRP is applied. For example, it is also considered that the current SCell/PCell becomes a candidate cell. Configuration/control in this case has not been clarified. This may inhibit processing after cell switch from being appropriately performed, and cause a problem such as reduction in communication throughput and the like, for example.

In view of this, the present disclosure has one object to provide a terminal, a radio communication method, and a base station that can appropriately perform configuration/processing at the time of cell switch.

### Solution to Problem

A terminal according to one aspect of the present disclosure includes a receiving section that receives a configuration indicating whether a serving cell may become a candidate cell for layer 1/layer 2 (L1/L2) inter-cell mobility, and a control section that controls switch of the serving cell, based on the configuration.

### Advantageous Effects of Invention

According to one aspect of the present disclosure, configuration/processing at the time of cell switch can be appropriately performed.

### Brief Description of Drawings

[FIG. 1] FIG. 1A to FIG. 1D are diagrams to show configuration examples of a multi-TRP.
[FIG. 2] FIG. 2A is a diagram to show an example of movement of a UE in Rel. 17. FIG. 2B is a diagram to show an example of movement of the UE in Rel. 18.
[FIG. 3] FIG. 3 is a diagram to show an example of an association between serving cells and candidate cells.
[FIG. 4] FIG. 4A is a diagram to show a first example of ServingCellConfig of option 1. FIG. 4B is a diagram to show a second example of ServingCellConfig of option 1.
[FIG. 5] FIG. 5 is a diagram to show a first example of option 2.
[FIG. 6] FIG. 6A is a diagram to show a second example of option 2. FIG. 6B is a diagram to show a third example of option 2.
[FIG. 7] FIG. 7 is a diagram to show serving cell switch example 1.
[FIG. 8] FIG. 8 is a diagram to show serving cell switch example 2.
[FIG. 9] FIG. 9 is a diagram to show serving cell switch example 3.
[FIG. 10] FIG. 10 is a diagram to show a configuration example of the serving cells according to aspect 1.1.
[FIG. 11] FIG. 11 is a diagram to show a configuration example of the serving cells according to aspect 1.2.
[FIG. 12] FIG. 12 is a diagram to show a configuration example of cell types of Embodiment 2.1.
[FIG. 13] FIG. 13 is a diagram to show an example of a schematic structure of a radio communication system according to one embodiment.
[FIG. 14] FIG. 14 is a diagram to show an example of a structure of a base station according to one embodiment.
[FIG. 15] FIG. 15 is a diagram to show an example of a structure of a user terminal according to one embodiment.
[FIG. 16] FIG. 16 is a diagram to show an example of a hardware structure of the base station and the user terminal according to one embodiment.
[FIG. 17] FIG. 17 is a diagram to show an example of a vehicle according to one embodiment.

### Description of Embodiments

### (Multi-TRP)

In NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID) or may correspond to different cell IDs. The cell ID may be a physical cell ID (PCI), or may be a virtual cell ID.

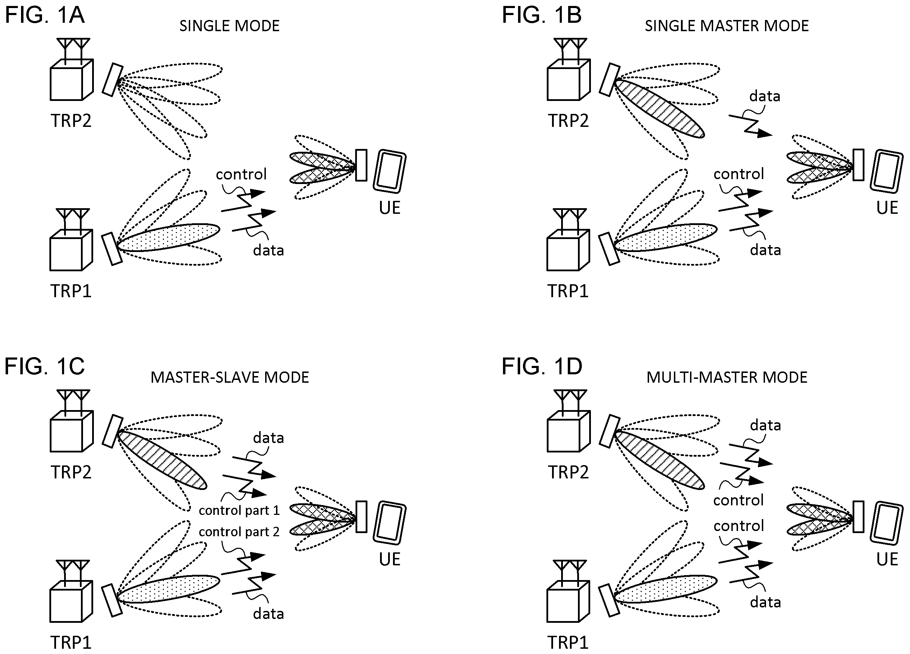

FIGS. 1A to 1D are diagrams to show examples of multi-TRP scenarios. In these examples, it is assumed that each TRP can transmit four different beams; however, this is not restrictive.

FIG. 1A shows an example of a case (which may be referred to as a single mode, a single TRP, or the like) in which only one TRP (in the present example, TRP1) out of the multi-TRP performs transmission to the UE. In this case, TRP1 transmits both of a control signal (PDCCH) and a data signal (PDSCH) to the UE.

FIG. 1B shows an example of a case (which may be referred to as a single master mode) in which only one TRP (in the present example, TRP1) out of the multi-TRP transmits a control signal to the UE, and the multi-TRP transmits a data signal thereto. The UE receives the PDSCHs transmitted from the multi-TRP, based on single downlink control information (DCI).

FIG. 1C shows an example of a case (which may be referred to as a master slave mode) in which each of the multi-TRP transmits a part of a control signal to the UE, and the multi-TRP transmits a data signal thereto. In TRP1, part 1 of the control signal (DCI) may be transmitted, and in TRP2, part 2 of the control signal (DCI) may be transmitted. Part 2 of the control signal may be dependent upon part 1. The UE receives the PDSCHs transmitted from the multi-TRP, based on these parts of the DCI.

FIG. 1D shows an example of a case (which may be referred to as a multi-master mode) in which each of the multi-TRP transmits a different control signal to the UE, and the multi-TRP transmits a data signal thereto. In TRP1, a first control signal (DCI) may be transmitted, and in TRP2, a second control signal (DCI) may be transmitted. The UE receives the PDSCHs transmitted from the multi-TRP, based on these DCIs.

When a plurality of PDSCHs (which may be referred to as multi-PDSCH (multiple PDSCHs)) from the multi-TRP as shown in FIG. 1B are scheduled using one DCI, the DCI may be referred to as single DCI (S-DCI, single PDCCH). When a plurality of PDSCHs from the multi-TRP as shown in FIG. 1D are respectively scheduled using a plurality of DCIs, the plurality of DCIs may be referred to as multi-DCI (M-DCI, multi-PDCCH (multiple PDCCHs)).

From each TRP of the multi-TRP, different transport blocks (TBs)/codewords (Code Words (CWs))/different layers may be transmitted. Alternatively, from each TRP of the multi-TRP, the same TB/CW/layer may be transmitted.

As one mode of multi-TRP transmission, non-coherent joint transmission (NCJT) has been under study. In NCJT, for example, TRP1 performs modulation mapping and then layer mapping on a first codeword so as to transmit a first PDSCH by using first precoding for a first number of layers (for example, two layers). TRP2 performs modulation mapping and then layer mapping on a second codeword so as to transmit a second PDSCH by using second precoding for a second number of layers (for example, two layers).

Note that it may be defined that a plurality of PDSCHs (multi-PDSCH) to be transmitted using NCJT partially or entirely overlap in at least one of the time and frequency domains. In other words, at least one of the time and frequency resources of the first PDSCH from the first TRP and the second PDSCH from the second TRP may overlap.

It may be assumed that the first PDSCH and the second PDSCH are not in a quasi-co-location (QCL) relationship (not quasi-co-located). Reception of the multi-PDSCH may be used interchangeably with simultaneous reception of the PDSCHs that are not of a certain QCL type (for example, QCL type D).

In URLLC for the multi-TRP, support of PDSCH (transport block (TB) or codeword (CW)) repetition across the multi-TRP has been under study. Support of repetition schemes across the multi-TRP (URLLC schemes, for example, schemes 1, 2a, 2b, 3, and 4) in the frequency domain, the layer (spatial) domain, or the time domain has been under study. In scheme 1, the multi-PDSCH from the multi-TRP is subjected to space division multiplexing (SDM). In schemes 2a and 2b, the PDSCH from the multi-TRP is subjected to frequency division multiplexing (FDM). In scheme 2a, a redundancy version (RV) is the same for the multi-TRP. In scheme 2b, the RV may be the same or may be different for the multi-TRP. In schemes 3 and 4, the multi-PDSCH from the multi-TRP is subjected to time division multiplexing (TDM). In scheme 3, the multi-PDSCH from the multi-TRP is transmitted in one slot. In scheme 4, the multi-PDSCH from the multi-TRP is transmitted in different slots.

According to the multi-TRP scenario as described above, more flexible transmission control using a channel with satisfactory quality can be performed.

NCJT using multi-TRP/panel may use a high rank. In order to support ideal and non-ideal backhauls among a plurality of TRPs, both of the single DCI (single PDCCH, for example, FIG. 1B) and the multi-DCI (multi-PDCCH, for example, FIG. 1D) may be supported. For both of the single DCI and the multi-DCI, the maximum number of TRPs may be 2.

For single PDCCH design (mainly for the ideal backhaul), enhancement of the TCI has been under study. Each TCI code point in the DCI may correspond to one or two TCI states. A TCI field size may be the same as that of Rel. 15.

### (L1/L2 Inter-Cell Mobility)

As described above, it is studied that the UE performs UL transmission to one or a plurality of cells/TRPs. As a procedure of this case, the following scenario 1 or scenario 2 is considered. Note that, in the present disclosure, a serving cell may be used interchangeably with a TRP in the serving cell. Layer 1/layer 2 (L1/L2) and DCI/Medium Access Control Control Element (MAC CE) may be used interchangeably. In the present disclosure, a physical cell ID (Physical Cell Identity (PCI)) different from the PCI of the current serving cell may be simply referred to as a "different PCI". A non-serving cell, a cell having a different PCI, and an additional cell may be used interchangeably.

### <Scenario 1>

Scenario 1 corresponds to inter-cell mobility of the multi-TRP, for example; however, it may be a scenario not corresponding to inter-cell mobility of the multi-TRP.
(1) The UE receives, from the serving cell, a configuration of an SSB for beam measurement of a TRP corresponding to a different PCI from the serving cell and a configuration necessary for using radio resources for data transmission and reception, including resources of the different PCI.
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured with a higher layer parameter related to the PCI of the non-serving cell from the serving cell. Scenario 1 may be applied in Rel. 17, for example.

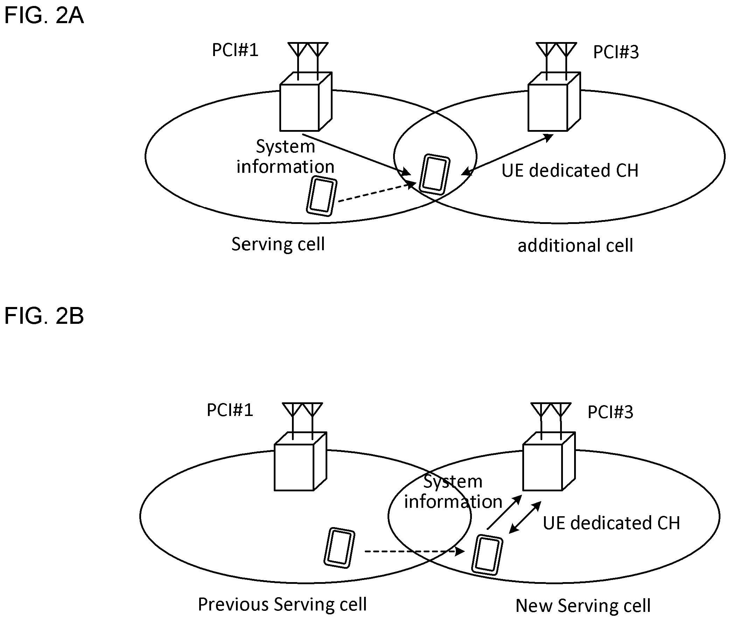

FIG. 2A is a diagram to show an example of movement of the UE in Rel. 17. It is assumed that the UE moves from a cell (serving cell) of PCI #1 to a cell (additional cell) (overlapping the serving cell) of PCI #3. In this case, in Rel. 17, the serving cell is not switched by L1/L2. The additional cell is a cell having an additional PCI different from the PCI of the serving cell. The UE can receive/transmit a UE-dedicated channel from the additional cell. The UE needs to be present within coverage of the serving cell in order to receive a UE common channel (for example, system information/paging/short message).

### <Scenario 2>

In scenario 2, L1/L2 inter-cell mobility is applied. In L1/L2 inter-cell mobility, the serving cell can be changed by using a function such as beam control without performing RRC reconfiguration. In other words, transmission and reception to and from an additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. In scenario 2, for example, the following procedure is performed.
(1) The UE receives, from the serving cell, a configuration of an SSB for a cell (additional cell) having a different PCI for beam measurement/serving cell change.
(2) The UE performs beam measurement of the cell using the different PCI, and reports measurement results to the serving cell.
(3) The UE may receive a configuration (serving cell configuration) of the cell having the different PCI by higher layer signaling (for example, RRC). In other words, a pre-configuration related to serving cell change is performed. The configuration may be performed together with or may be performed separately from the configuration in (1).
(4) Based on the above report, the TCI state of the cell having the different PCI is activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 2B is a diagram to show an example of movement of the UE in Rel. 18. In Rel. 18, the serving cell is switched by L1/L2. The UE can receive/transmit a UE-dedicated channel/common channel from/to a new serving cell. The UE may go out of the coverage of the previous serving cell.

### (Configuration of Plurality of Candidate Cells)

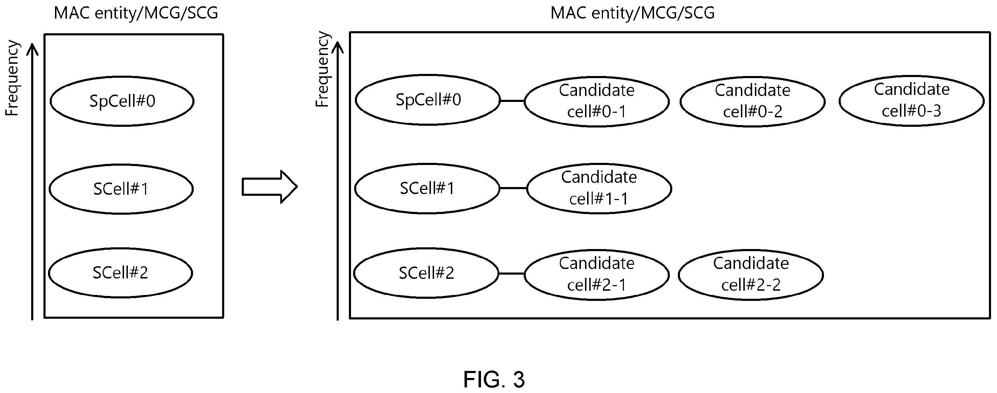

FIG. 3 is a diagram to show an example of an association between serving cells and candidate cells. SpCell #0, SCell #1, or SCell #2 is a serving cell. Note that the SpCell means a special cell (including a primary cell (PCell) and a primary secondary cell (PSCell)). The SCell means a secondary cell. SpCell #0 is associated with candidate cell #0-1, candidate cell #0-2, and candidate cell #0-3. SCell #1 is associated with candidate cell #1-1. SCell #2 is associated with candidate cells #2-1 and 2-2. In this manner, one or more candidate cells (candidate serving cells) may be associated with the serving cell.

Regarding a configuration of a cell to become a candidate (candidate cell) when the serving cell is changed, for example, the following options 1 and 2 are considered.

### <Option 1>

As in inter-cell mobility of Rel. 17, information in ServingCellConfig may include information related to a plurality of candidate cells. In this case, the plurality of candidate cells need to share the same configuration such as the PDCCH/PDSCH/UL as the serving cell.

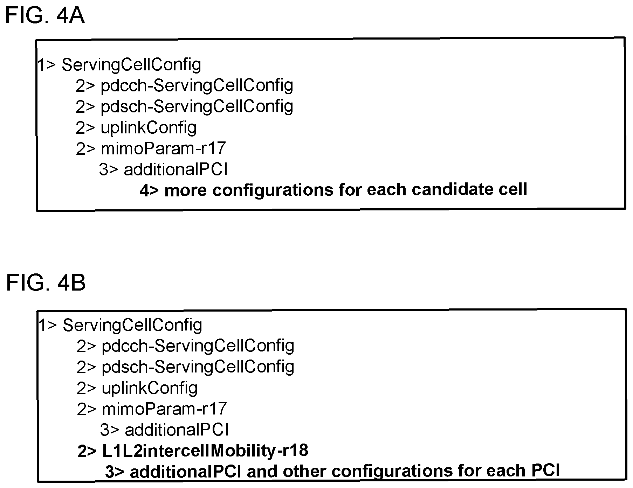

For example, in inter-cell mobility of Rel. 17, it is studied that "mimoParam-r17" is added and PCI configuration information is added under ServingCellConfig (FIG. 4A and FIG. 4B). The framework is applied when a cell having a different PCI shares the same configuration such as the PDCCH/PDSCH/UL.

More configurations such as an LTE CRS pattern and a RACH configuration may be applied to each candidate cell. By also considering a cell-dedicated CSI-RS configuration (for CSI/TRS), a different CSI-RS occasion/resource for each cell can be configured, and interference can be reduced.

FIG. 4A is a diagram to show a first example of ServingCellConfig of option 1. In FIG. 4A, ServingCellConfig includes a configuration of an additional cell (each candidate cell). FIG. 4B is a diagram to show a second example of ServingCellConfig of option 1. In FIG. 4B, ServingCellConfig includes a configuration of an additional cell (each candidate cell) for L1/L2 inter-cell mobility. FIG. 4A corresponds to scenario 1 described above, for example. FIG. 4B corresponds to scenario 2 described above, for example.

As in FIG. 4A and FIG. 4B, the candidate cell is pre-configured by RRC. As an initial state, the candidate cell may be fixed as activated/deactivated in a specification, or may be configured to be activated/deactivated by RRC. Furthermore, the candidate cell for L1/L2 cell switch may be activated/deactivated by a MAC CE. An L1/L2 cell switch indication may be transmitted only from a cell out of active cells.

### <Option 2>

A complete configuration (for example, ServingCellConfig) corresponding to each cell may be applied to a plurality of candidate cells, and the plurality of candidate cells may be associated with each serving cell by reusing a carrier aggregation (CA) configuration framework. The UE is provided with a complete configuration of each candidate cell, and can thus perform appropriate communication with the candidate cells.

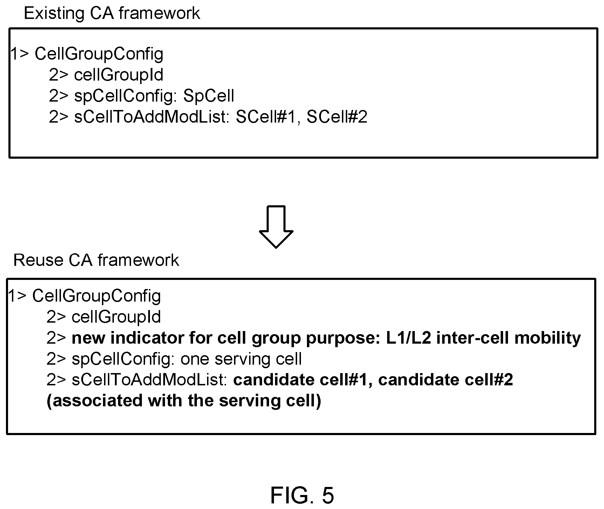

In the CA configuration framework, an SpCell can be configured for each cell group, and a plurality of SCells can be added. By reusing the CA framework, the serving cell may be configured for each cell group for L1/L2 inter-cell mobility, and a plurality of candidate cells may be configured (FIG. 5). The candidate cells may be activated/deactivated by a MAC CE. The method is considered to be beneficial for reducing complexity of UE operation. As an example, CellGroupConfig with cell group ID 0 is shown.

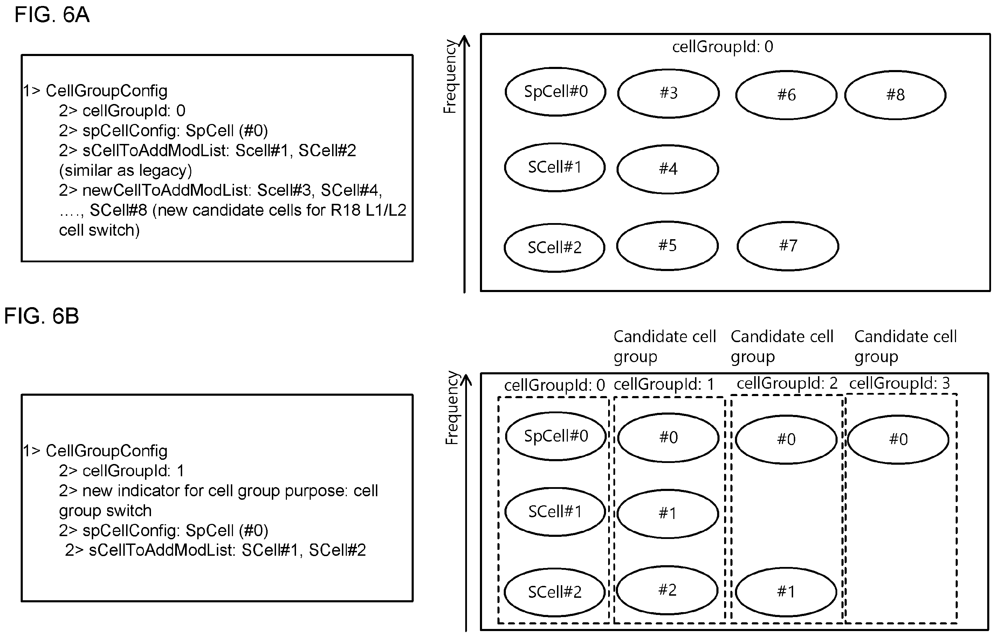

FIG. 6A is a diagram to show a second example of option 2. In the example of FIG. 6A, a common candidate cell pool for cell switch in the MCG/SCG is applied to the candidate cells. In other words, the candidate cells are regarded as one pool (group), regardless of a frequency band.

FIG. 6B is a diagram to show a third example of option 2. In the example of FIG. 6B, a plurality of cell groups are configured, and cell group switch can be performed by using L1/L2 signaling. The candidate cells are configured for each cell group, and a configuration of each group includes corresponding SpCell and SCell indices. Although CellGroupConfig of FIG. 6B is represented by CellGroupConfig with "cell group ID: 1" as an example, CellGroupConfig with "cell group ID: 2, 3" is also separately configured.

### (Signaling for Serving Cell Change Indication)

Implicit or explicit signaling for a serving cell change indication will be described.

### [Aspect 1]

In aspect 1, implicit signaling for a serving cell change indication will be described.

### [[Option 1-1]]

When a specific control resource set (CORESET) (for example, at least one of CORESET #0, a CORESET of CH5 Type0-CSS, and a CORESET of CH6/CH7/CH8 CSS) is indicated (activated) by a MAC CE together with one or more TCI states associated with a cell having a PCI different from the PCI of the serving cell (when one or more TCI states associated with a cell having a PCI different from the PCI of the serving cell are indicated/activated for a specific CORESET by a MAC CE), the UE may determine to change the serving cell to another cell (cell x, the cell having the different PCI). In other words, the activation may implicitly indicate change of the serving cell to another cell.

In this case, the UE may update a beam of another CORESET ID, another CORESET using CH6/CH7/CH8, or another CORESET using a CSS to the same TCI state(s) as the activated TCI state(s).

### [[Option 1-2]]

When a MAC CE activates/deactivates TCI states of the PDSCH, and all of the TCI states activated by the MAC CE are associated with the same cell x having a PCI different from the PCI of the serving cell, the UE may determine to change the serving cell to another cell (cell x). In other words, the association may implicitly indicate change of the serving cell to another cell.

In a case in which the option is applied, when a NW (base station) does not change the serving cell, and the MAC CE activates the TCI states of the PDSCH associated with the cell having the different PCI, TCI states related to another cell (for example, the current serving cell or a cell having a second different PCI) need to be included as well.

### [[Option 1-3]]

When a MAC CE activates/deactivates unified TCI states (for example, corresponding to a unified TCI framework of Rel. 17), and all of the activated unified TCI states are associated with the same cell x having a different PCI, the UE may determine to change the serving cell to another cell (cell x). In other words, the association may implicitly indicate change of the serving cell to another cell.

### [Aspect 2]

In aspect 2, explicit signaling for a serving cell change indication will be described. In aspect 2, for example, scenario 2 described above is applied.

### [[Option 2-1]]

An example of the serving cell change indication will be described below. Note that activation/deactivation of the non-serving cell, change of the serving cell, and transmission/reception of another cell (non-serving cell) having a physical cell ID different from the physical cell ID of the serving cell may be used interchangeably.

The UE may receive a new MAC CE including at least one of fields (information) shown in (1) to (3) below corresponding to the non-serving cell, which is used for activation/deactivation of the non-serving cell. When the UE receives the MAC CE, the UE may determine to change the serving cell to another cell (non-serving cell). The UE may control transmission and reception of a DL signal/UL signal to and from the non-serving cell, based on the information. Note that there may be one or a plurality of non-serving cells. In the example shown below, a MAC CE including a plurality of fields indicating a plurality of non-serving cell indices is applied.
(1) Serving cell ID.
(2) BWP ID.
(3) Non-serving cell ID used for activation. The non-serving cell ID may be replaced with any information corresponding to the non-serving cell (with which the non-serving cell can be identified).

As an example of (3), for example, one of (3-1) to (3-5) may be applied.
(3-1) PCI (PCI to be used directly). For example, 10 bits are used.
(3-2) Recreated index (new ID) of the non-serving cell. The new ID may be associated with a part of PCIs, and may be configured only for the serving cell and the non-serving cell used by (available to) the UE. The new ID can have a reduced number of bits in comparison to the PCI.
(3-3) CSI report configuration ID (CSI-ReportConfigId) (when CSI-ReportConfig corresponds to one or a plurality of non-serving cells).
(3-4) CSI resource configuration ID (CSI-ResourceConfigId) (when CSI-ResourceConfigId corresponds to one or a plurality of non-serving cells).
(3-5) Bitmap indicating activation/deactivation of each non-serving cell. The size (the number of bits) of the bitmap may be the same as the number of non-serving cells configured in the CC. For example, when a second non-serving cell out of three non-serving cells is activated, "010" is configured.

At least one of the information included in the MAC CE may be included in DCI. Alternatively, at least one of the serving cells activated by the MAC CE may be indicated by DCI. The MAC CE/DCI may include a field for indicating a TCI state/SSB/CSI-RS from a cell having a different PCI so that the UE can recognize a monitored DL beam in a target cell (changed serving cell). The UE may create and transmit a beam report (CSI report) by using the TCI state/SSB/CSI-RS.

### [[Option 2-2]]

The UE may receive a MAC CE, in which a new 1-bit field "C" is added to an existing MAC CE. The field indicates whether to perform serving cell change. The UE may receive the MAC CE and determine whether to change the serving cell to another cell, based on the field.

### [[Option 2-3]]

Regarding the MAC CE in option 2-2, a field indicating a serving cell index/PCI/another ID (the new ID of option 2-1 described above or the like) and a field of a TCI state/SSB/CSI-RS of a target cell (changed serving cell) may further be included in the MAC CE.

In this manner, the indication for the serving cell change indication is indicated by a MAC CE/DCI, and therefore the UE can appropriately perform serving cell change.

### [Serving Cell Switch Example 1]

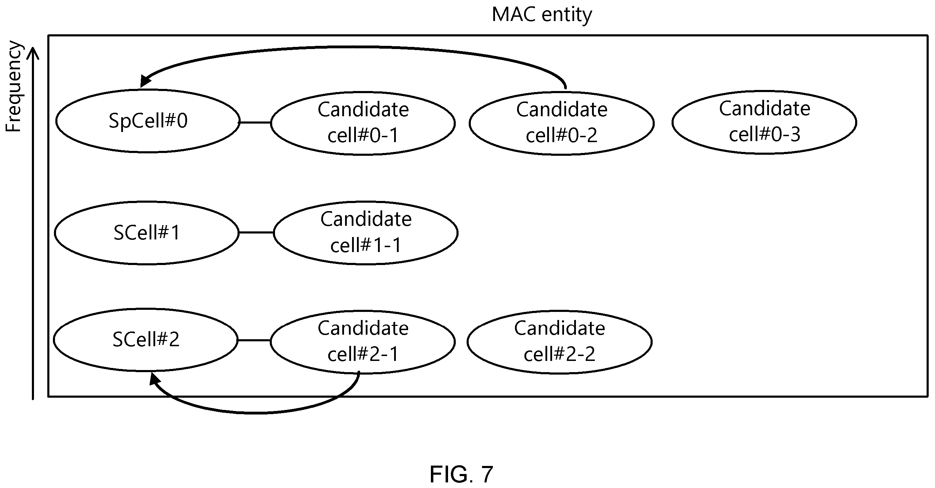

FIG. 7 is a diagram to show serving cell switch example 1. For example, when change of the serving cell to candidate cell #0-2 is indicated by L1/L2 signaling in serving cell SpCell #0 of the MCG/SCG, candidate cell #0-2 becomes new serving cell SpCell #0. For example, when change of the serving cell to candidate cell #2-1 is indicated by L1/L2 signaling in serving cell SCell #2 of the MCG/SCG, candidate cell #2-1 becomes new serving cell SCell #2.

### [Serving Cell Switch Example 2]

RRC/MAC CE can configure global candidate cell IDs (cells #0, ..., 5) for each cell group, band, FR, and UE. The UE may be indicated with serving cell switch by the global candidate cell IDs.

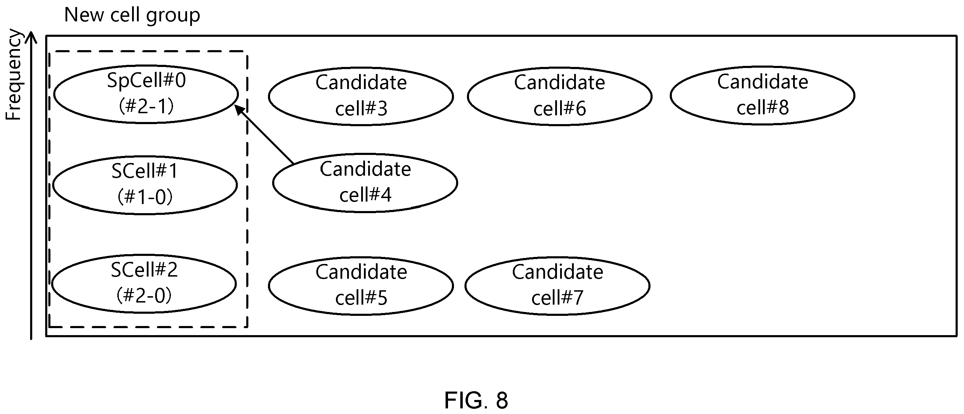

FIG. 8 is a diagram to show serving cell switch example 2. Similarly to FIG. 6A, a pool of a plurality of candidate cells may be configured, and the serving cell can be switched to any (activated) candidate cell in the pool by L1/L2 signaling. In this case, the configured candidate cells may become either the SpCells or the Sells, based on L1/L2 signaling.

The UE may receive an indication of serving cell change (from cell #2-1 to candidate cell 4) by a MAC CE/DCI. The indicated candidate cell #4 becomes the new SpCell of the cell group.

### [Serving Cell Switch Example 3]

RRC/MAC CE can configure global candidate cell IDs (cells #0-1, #0-1, ..., 2-2) for each cell group, band, FR, and UE. The UE may be indicated with serving cell switch by the global candidate cell IDs.

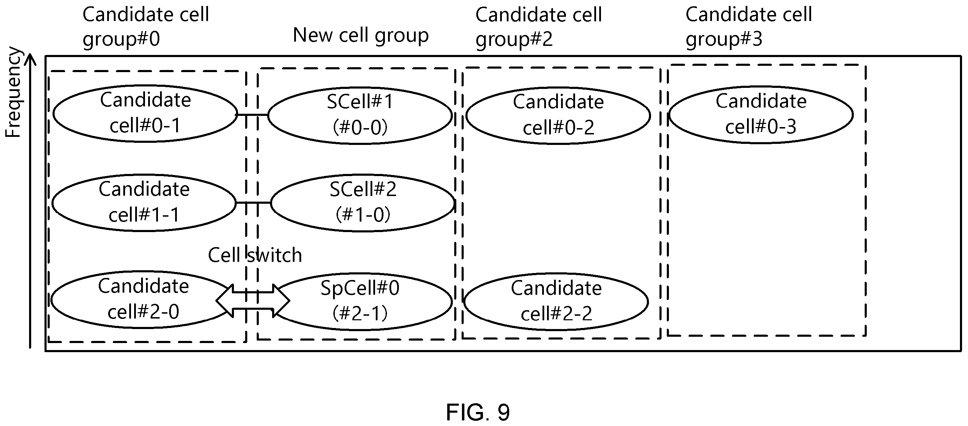

FIG. 9 is a diagram to show serving cell switch example 3. The UE receives an indication of serving cell change (from cell #2-0 to cell #2-1) by a MAC CE/DCI. The indicated cell #2-1 becomes the new SpCell of the cell group. Cells (cell #0-0 and cell #1-0) of the same cell group as the indicated cell #2-1 become SCell #1 and SCell #2. In other words, the serving cell group is switched.

### (Analysis)

As described above, it is studied that cell switch is performed using L1/L2 inter-cell mobility when the multi-TRP is applied. For example, it is also considered that the current SCell/PCell becomes a candidate cell (in other words, a target PCell/SCell and a candidate cell is the current SCell/PCell). Configuration/control in this case has not been clarified. This may inhibit processing after cell switch from being appropriately performed, and cause a problem such as reduction in communication throughput and the like, for example.

For example, how to configure the current SCell/PCell as a candidate cell has not been clarified. After cells are switched and when a target cell is the current SCell in particular, how to handle the existing SCell has not been clarified. Unless these are clarified, consecutive cell switches using L1/L2 inter-cell mobility may not be smoothly performed.

In view of this, the inventors of the present invention came up with the idea of a terminal, a radio communication method, and a base station that can appropriately perform configuration/processing at the time of cell switch.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be used interchangeably. In the present disclosure, "A/B/C" may mean "at least one of A, B, and C".

In the present disclosure, notify, activate, deactivate, indicate, select, configure, update, determine, and the like may be used interchangeably. In the present disclosure, "support", "control", "controllable", "operate", "operable", and the like may be used interchangeably.

In the present disclosure, radio resource control (RRC), an RRC parameter, an RRC message, a higher layer parameter, a field, an information element (IE), a configuration, and the like may be used interchangeably. In the present disclosure, a Medium Access Control control element (MAC Control Element (CE)), an update command, an activation/deactivation command, and the like may be used interchangeably.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be used interchangeably. In the present disclosure, a sequence, a list, a set, a group, a cluster, a subset, a pool, and the like may be used interchangeably.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be used interchangeably.

A spatial relation information Identifier (ID) (TCI state ID) and spatial relation information (TCI state) may be used interchangeably. "Spatial relation information" may be used interchangeably with "a set of spatial relation information", "one or a plurality of spatial relation information", and the like. The TCI state and the TCI may be used interchangeably.

In the present disclosure, drop, stop, cancel, puncture, rate match, postpone, not transmit, and the like may be used interchangeably.

In the present disclosure, a cell group, a serving cell group, a master cell group (MCG), and a secondary cell group (SCG) may be used interchangeably. L1/L2, L1/L2 signaling, and DCI/MAC CE may be used interchangeably. The serving cell may be replaced with a cell that transmits the PDSCH. The candidate cell may mean a candidate cell to become the serving cell in L1/L2 inter-cell mobility.

In the present disclosure, a cell, a PCI, a serving cell, an SpCell, a source serving cell, a CC, a BWP, a BWP in a CC, and a band may be used interchangeably. In the present disclosure, an additional cell, another cell, a non-serving cell, a cell having a different PCI, a candidate cell, a candidate serving cell, a cell having a PCI different from the PCI of the current serving cell, another serving cell, a target cell, and a neighboring cell may be used interchangeably. In the present disclosure, switch, change, and update may be used interchangeably. The serving cell may be used interchangeably with a serving cell before being switched or a serving cell after being switched.

A serving cell, an SpCell, a PSCell, a PCell, and an SCell may be used interchangeably. A cell switch command, a cell change indication, and a serving cell change indication may be used interchangeably.

### (Radio Communication Method)

### <Embodiment 1>

Processing of a case in which the current serving cell is configured as a candidate cell will be described. In the present embodiment, for example, scenario 2 for L1/L2 inter-cell mobility described above may be applied. The UE may receive a configuration/indication/parameter indicating whether the serving cell may become a candidate cell for layer 1/layer 2 (L1/L2) inter-cell mobility by higher layer signaling/physical layer signaling, and control serving cell switch based on the configuration/indication/parameter.

### [Aspect 1.1]

The UE may receive a configuration/indication/parameter indicating whether all the serving cells in a cell group may become candidate cells (or target SpCell/SCell candidates) for L1/L2 inter-cell mobility for each cell group (MCG/SCG) by higher layer signaling/physical layer signaling. In other words, the UE may receive (one) configuration/indication/parameter common to all the serving cells in the cell group.

When the configuration/indication/parameter common to the serving cells indicates "No" (there are no cells that may become candidate cells), only the candidate cells pre-configured by RRC signaling or the like are applied to the candidate cells. For example, cells of type C to be described later need not be applied to the candidate cells.

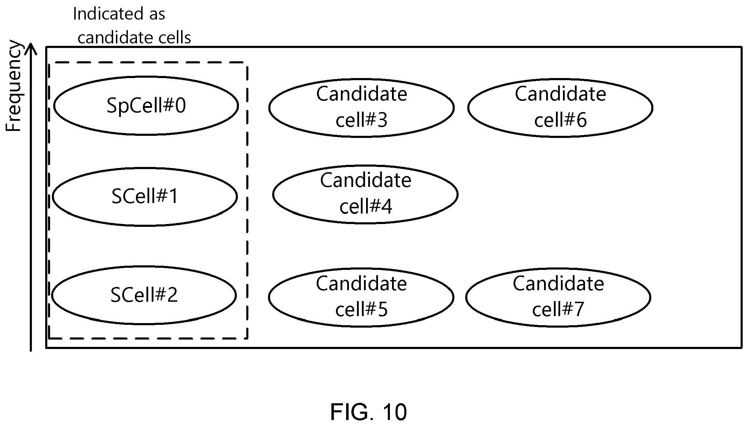

FIG. 10 is a diagram to show a configuration example of the serving cells according to aspect 1.1. In FIG. 10, regarding a cell group including SpCell #0, SCell #1, and SCell #2, the UE receives a configuration/indication/parameter indicating that they may become candidate cells for L1/L2 inter-cell mobility. Note that candidate cells #3 to #7 may be pre-configured by RRC signaling or the like that they may become candidate cells.

### [Aspect 1.2]

The UE may receive a configuration/indication/parameter indicating whether each serving cell/CC in a cell group (MCG/SCG) may become a candidate cell (or a target SpCell/SCell candidate) for L1/L2 inter-cell mobility by higher layer signaling/physical layer signaling. In other words, the UE may receive an individual configuration/indication/parameter for each serving cell.

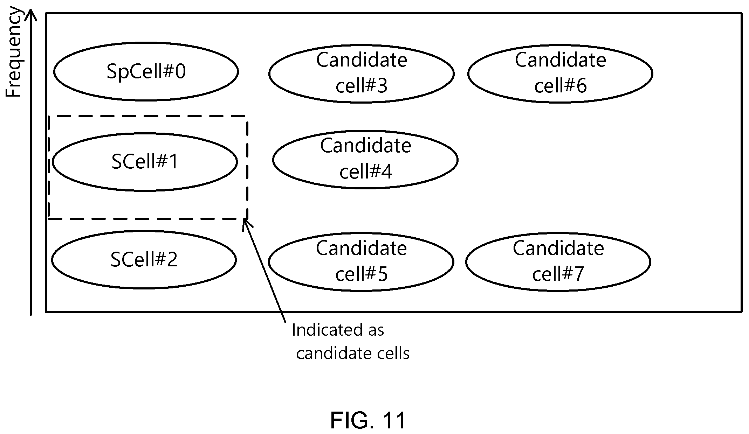

FIG. 11 is a diagram to show a configuration example of the serving cells according to aspect 1.2. In FIG. 11, regarding SCell #1, the UE receives a configuration/indication/parameter indicating that it may become a candidate cell for L1/L2 inter-cell mobility. Regarding SpCell #0 and SCell #2, the UE may receive a configuration/indication/parameter indicating that they may not become candidate cells for L1/L2 inter-cell mobility. Note that candidate cells #3 to #7 may be pre-configured by RRC signaling or the like that they may become candidate cells.

### [Supplements]

Note that, in aspects 1.1 and 1.2, the candidate cells configured for the cell group may be included in candidate cell pools (groups) for both of SpCell cell switch for L1/L2 inter-cell mobility and SCell cell switch for L1/L2 inter-cell mobility. In other words, the serving cell to become a candidate cell may be switched to the SpCell or the SCell.

The UE may transmit (report) UE capability information indicating support of the serving cell (SpCell/SCell) as a candidate cell (that it may become a candidate cell). For example, when aspect 1.1 is applied, the UE may transmit UE capability information indicating support of all the serving cells in a cell group as candidate cells. For example, when aspect 1.2 is applied, the UE may transmit UE capability information indicating support of each serving cell in a cell group as a candidate cell (that it may become a candidate cell).

According to the present embodiment, when the serving cell (SpCell/SCell) becomes a candidate cell, an appropriate configuration can be performed.

### <Embodiment 2.1>

The UE may receive a cell switch command of the SpCell by L1/L2 signaling, and perform different assumption regarding a status of activation/deactivation of the candidate cell, based on a type of the candidate cell (target cell).

When the cell switch command (serving cell change indication) is transmitted by L1/L2 signaling, the UE may keep/store/maintain an RRC configuration of the current SCell and an RRC configuration of the candidate cell unless the UE receives an RRC reconfiguration signal. Cell switch may be one of single cell switch, multi-cell switch, and cell group switch.

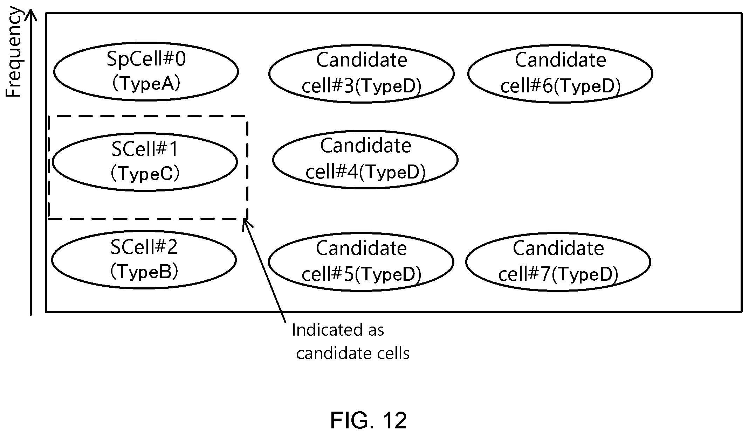

Note that, for the sake of description in the present disclosure, the following four types of cells are defined. Note that the present embodiment is applicable to both of aspect 1.1 and aspect 1.2 of the first embodiment. Each type of cell is applied as in FIG. 12, for example. Note that, in the present disclosure, type A, type B, type C, and type D may be used interchangeably.
Type A: SpCell.
Type B: SCell not indicated as a candidate cell.
Type C: SCell indicated as a candidate cell.
Type D: Candidate cell configured by RRC (not the original SCell).

### [Case a]

When a cell switch command of the SpCell is transmitted by L1/L2 signaling, and a candidate cell (a target cell, a cell to become a new SpCell) is not the SCell (in other words, the target cell is a type-D cell), the following option 1 or 2 is applied to the candidate cell of type D, the following options 3B to 5B are applied to the serving cell of type B, the following options 3C to 5C are applied to the serving cell/candidate cell of type C, and the following option 6 is applied to the SpCell of type A.

### <<Option 1>>

The UE may assume that the status of activation/deactivation of each type-D cell is not changed. This may allow for sequential L1/L2 cell change.

### <<Option 2>>

The UE may receive an indication of activation/deactivation of each type-D cell in the same signaling (simultaneous signaling) as the cell switch command.

Note that, in option 1 or 2, the candidate cell (the target cell, the cell to become a new SpCell) may be activated at the time point of becoming the new SpCell, regardless of whether there is an activation signal.

### <<Option 3B>>

The UE may assume that the status of activation/deactivation of each type-B cell is not changed.

### <<Option 4B>>

When the UE does not receive a new indication related to activation/deactivation, the UE may assume that each type-B cell is deactivated.

### <<Option 5B>>

The UE may receive an indication of activation/deactivation of each type-B cell in the same signaling (simultaneous signaling) as the cell switch command.

### <<Option 3C>>

The UE may assume that the status of activation/deactivation of each type-C cell is not changed.

### <<Option 4C>>

When the UE does not receive a new indication related to activation/deactivation, the UE may assume that each type-C cell is deactivated.

### <<Option 5C>>

The UE may receive an indication of activation/deactivation of each type-C cell in the same signaling (simultaneous signaling) as the cell switch command.

### <<Option 6>>

After the cell switch command is transmitted to the UE, the SpCell of type A become a candidate cell of type D. The UE may assume that the state of the cell is activated or deactivated. Alternatively, the UE may be indicated with activation/deactivation of the cell by the cell switch command.

### [Case b]

Case b is a case in which the cell switch command of the SpCell is transmitted by L1/L2 signaling, and a candidate cell (a target cell, a cell to become a new SpCell) is the SCell of type C. In this case, the SCell of type C being a target cell becomes the new SpCell, and thus the UE may assume that the state of the cell is activated, regardless of whether there is activation signaling. Each option of case a may be similarly applied to other cells.

### [Case c]

When the UE receives the cell switch command of the SCell by L1/L2 signaling signal, similar options of case a or case b may be applied. In other words, the SpCell of case a or case b may be used interchangeably with the SCell.

### [Supplements]

The cell switch command may include an indication of the state of activation/deactivation of each candidate cell/each serving cell. Alternatively, the cell switch command may be transmitted to the UE together with the indication.

For example, as an indication of activation/deactivation, a bitmap may be used. In this case, each bit may indicate activation/deactivation of each candidate cell/each serving cell. In the indication of activation/deactivation, a part or all of cell indices may be explicitly indicated. A transmission of the cell index may implicitly indicate activation/deactivation of the cell.

For example, as the cell switch command, signaling (for example, a MAC CE/DCI) different from the indication of the state of activation/deactivation may be used. For example, the UE may be indicated only with the state of activation/deactivation of specific/part of cell(s) (a source cell of cell switch, a type-B cell, a type-C cell, a type-D cell, or the like).

The UE may transmit UE capability information indicating whether to support update of an activated/deactivated state of another cell (candidate cell/serving cell) at the time of cell switch.

### <Embodiment 2.2>

In Embodiment 2.2, not only activation/deactivation but also change of roles of cells (for example, the role of the serving cell/candidate cell, the type-A/B/C/D cell) will be described. For example, when a cell is switched, a target cell (candidate cell) becomes the serving cell, and is also activated. Regarding the original serving cell (before being changed), the following options may be applied.

### <<Option 1>>

The original serving cell becomes a candidate cell. Activation/deactivation may be determined based on Embodiment 2.1.

### <<Option 2>>

The original serving cell may remain as the serving cell, and may be activated/deactivated. The option assumes a case in which, for example, the roles of SpCell #0 and SCell #1 are interchanged, SpCell #0 becomes the SCell, and SCell #1 becomes the new SpCell.

### <<Option 3>>

The original serving cell may become the type-C cell or the type-B cell.

### <<Option 4>>

The UE may receive a specific signal indicating whether or not the role of a cell is changed. The specific signal may be the same signal as the cell switch command/cell state indication, or may be another signal. The specific signal may only indicate whether or not the role of the original serving cell (source cell) is changed (for example, whether or not it is changed to the candidate cell, or whether or not it is changed to the type-C cell). For example, the specific indication may indicate an indication of role change of a plurality/all of cells.

### <<Option 5>>

For the original serving cell, role change or the like may be performed, depending on a type of a target cell. For example, when the target cell is of type B or type C, the UE may interchange the roles between the original serving cell and the target cell. For example, when the target cell is of type A or type D, the UE need not interchange the roles between the original serving cell and the target cell.

### <Embodiment 3>

Regarding the serving cell and the candidate cell in a cell group, a specific index corresponding to the cell/PCI configured by RRC may be indicated. The specific index is an index related to a part of PCIs, for example. Regarding the specific index, an association between a PCI cell and a reconfiguration index is configured by RRC. The specific index can have a reduced number of bits in comparison to the PCI, and thus an indication to a cell using a bitmap in a MAC CE/DCI or the like can be facilitated. Regarding whether the specific index is updated after cell switch, one of the following options may be applied.

### <<Option 1>>

The UE may maintain the specific index when the UE does not receive an RRC reconfiguration signal (before a new RRC reconfiguration is performed). For example, specific index "0" may be for the current SpCell, or may not be for the current SpCell.

### <<Option 2>>

Only in the case of SpCell switch, the UE may interchange specific indices of the original SpCell and the target cell. For example, specific index "0" may be invariably configured for the SpCell.

### <<Option 3>>

When cell switch is occurred, the UE may interchange specific indices of the serving cell and the target cell. In this case, the index of the serving cell may be invariably smaller (lower) than the index of the candidate cell.

### <<Option 4>>

The cell switch command may indicate specific indices of a part/all of the serving cells/candidate cells. The indication of the specific index may be included in the same signal as the cell switch command, or may be included in another signal (for example, by a MAC CE/DCI). The UE may transmit UE capability information indicating support of the function of option 4.

### <Case of Group Switch>

Each embodiment may be applicable to a case of cell group switch (for example, FIG. 9).

Embodiments 2.1 and 2.2 may be applied to cell group switch. When the UE receives the cell group switch command by L1/L2 signaling, the following processing may be performed.
- A target cell group is activated.
- The original serving cell group (before being changed) may be deactivated, may remain activated, or the status of activation/deactivation may be explicitly indicated to the UE by new signaling.
- The original serving cell group (before being changed) may be deactivated or may remain activated, or the status of activation/deactivation may be explicitly indicated to the UE by new signaling.
- Activation/deactivation of the cell group may be the same signal as the cell group indication (switch indication), or may be another new signal (MAC CE/DCI).

The UE may be indicated with role change of the SpCell/SCell of each cell group (or a specific cell group, for example, a target cell group). The UE may transmit UE capability information related to update of activation/deactivation of the cell group.

Embodiment 3 may be applied to cell group switch. For example, the specific index may be used interchangeably with a specific cell group index, and the PCI may be used interchangeably with a cell group index (original cell group index). The cell group indices of the serving cell group and the candidate cell group may be maintained, may be switched (switch between the target cell group and the original serving cell group), or may be explicitly indicated to the UE by new signaling. The UE may transmit UE capability information related to update of the cell group index.

### <Supplements>

### [Notification of Information to UE]

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### [Notification of Information from UE]

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### [Regarding Application of Each Embodiment]

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate support of specific processing/operation/control/information regarding at least one of the embodiments described above.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19) or the like.

When the UE does not support at least one of the specific UE capabilities above or is not configured with the specific information, operation of Rel. 15/16 may be applied, for example.

### (Supplementary Note)

Regarding one embodiment of the present disclosure, the following supplementary notes of the invention will be given.

### {Supplementary Note 1}

A terminal including:
a receiving section that receives a configuration indicating whether a serving cell may become a candidate cell for layer 1/layer 2 (L1/L2) inter-cell mobility; and
a control section that controls switch of the serving cell, based on the configuration.

### {Supplementary Note 2}

The terminal according to supplementary note 1, wherein
the configuration is a configuration, for each cell group, indicating whether all the serving cells in a cell group may become the candidate cells for L1/L2 inter-cell mobility.

### {Supplementary Note 3}

The terminal according to supplementary note 1, wherein
the configuration is a configuration indicating whether each serving cell in a cell group may become the candidate cell for L1/L2 inter-cell mobility.

### {Supplementary Note 4}

The terminal according to any one of supplementary notes 1 to 3, wherein
the switch of the serving cell is that the serving cell to become the candidate cell is switched to a special cell (SpCell) or a secondary cell (SCell).

Regarding one embodiment of the present disclosure, the following supplementary notes of the invention will be further given.

### {Supplementary Note 1}

A terminal including:
a receiving section that receives a cell switch command of a special cell (SpCell) by layer 1/layer 2 (L1/L2) signaling; and
a control section that performs different assumption regarding a status of activation or deactivation of the candidate cell, based on a type of the candidate cell.

### {Supplementary Note 2}

The terminal according to supplementary note 1, wherein
the control section assumes that the status of activation or deactivation of the candidate cell is not changed.

### {Supplementary Note 3}

The terminal according to supplementary note 1 or 2, wherein
the receiving section receives an indication of activation or deactivation of the candidate cell.

### {Supplementary Note 4}

The terminal according to any one of supplementary notes 1 to 3, wherein
the receiving section receives an index related to a part of physical cell indices (PCIs) for a serving cell and the candidate cell in a cell group.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

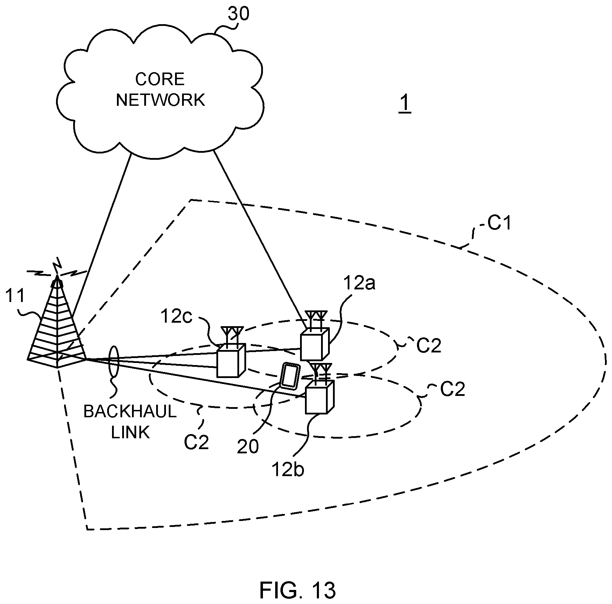

FIG. 13 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR), and so on, whose specifications have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10", unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor", and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs), such as a User Plane Function (UPF), an Access and Mobility management Function (AMF), a Session Management Function (SMF), Unified Data Management (UDM), an Application Function (AF), a Data Network (DN), a Location Management Function (LMF), and Operation, Administration and Maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment", "DL DCI", and so on, and DCI for scheduling the PUSCH may be referred to as "UL grant", "UL DCI", and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space", a "search space set", a "search space configuration", a "search space set configuration", a "CORESET", a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block", an "SS Block (SSB)", and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

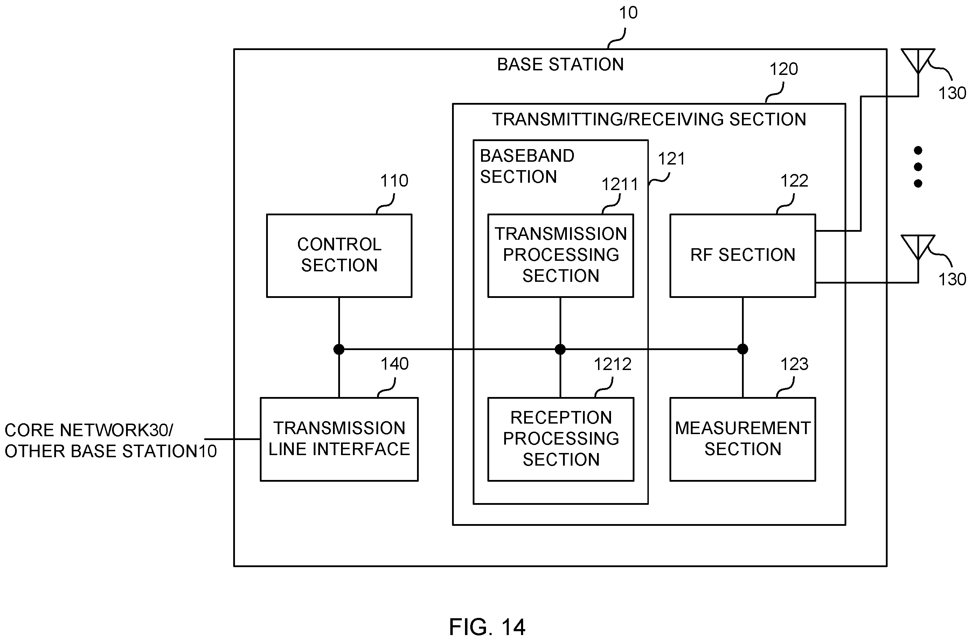

FIG. 14 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus (for example, a network node that provides NFs) included in the core network 30, other base stations 10, and so on, and, for example, acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit a configuration indicating whether a serving cell may become a candidate cell for layer 1/layer 2 (L1/L2) inter-cell mobility.

The control section 110 may control switch of the serving cell, based on the configuration.

The transmitting/receiving section 120 may transmit a cell switch command of a special cell (SpCell) by layer 1/layer 2 (L1/L2) signaling.

The control section 110 may perform different control regarding a status of activation or deactivation of the candidate cell, based on a type of the candidate cell.

### (User Terminal)

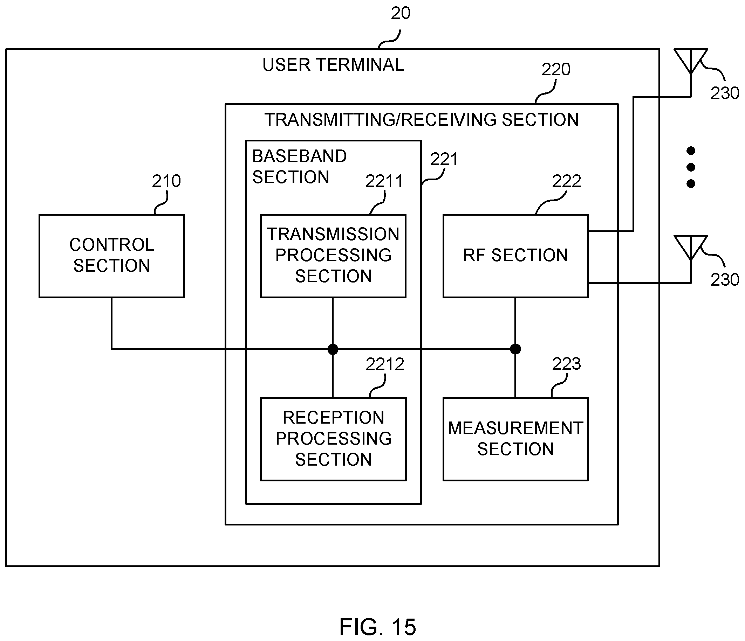

FIG. 15 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration indicating whether a serving cell may become a candidate cell for layer 1/layer 2 (L1/L2) inter-cell mobility.

The control section 210 may control switch of the serving cell, based on the configuration.

The configuration may be a configuration, for each cell group, indicating whether all the serving cells in a cell group may become the candidate cells for L1/L2 inter-cell mobility.

The configuration may be a configuration indicating whether each serving cell in a cell group may become the candidate cell for L1/L2 inter-cell mobility.

The switch of the serving cell may be that the serving cell to become the candidate cell is switched to a special cell (SpCell) or a secondary cell (SCell).

The transmitting/receiving section 220 may receive a cell switch command of a special cell (SpCell) by layer 1/layer 2 (L1/L2) signaling.

The control section 210 may perform different assumption regarding a status of activation or deactivation of the candidate cell, based on a type of the candidate cell.

The control section 210 may assume that the status of activation or deactivation of the candidate cell is not changed.

The transmitting/receiving section 220 may receive an indication of activation or deactivation of the candidate cell.

The transmitting/receiving section 220 may receive an index related to a part of physical cell indices (PCIs) for a serving cell and the candidate cell in a cell group.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

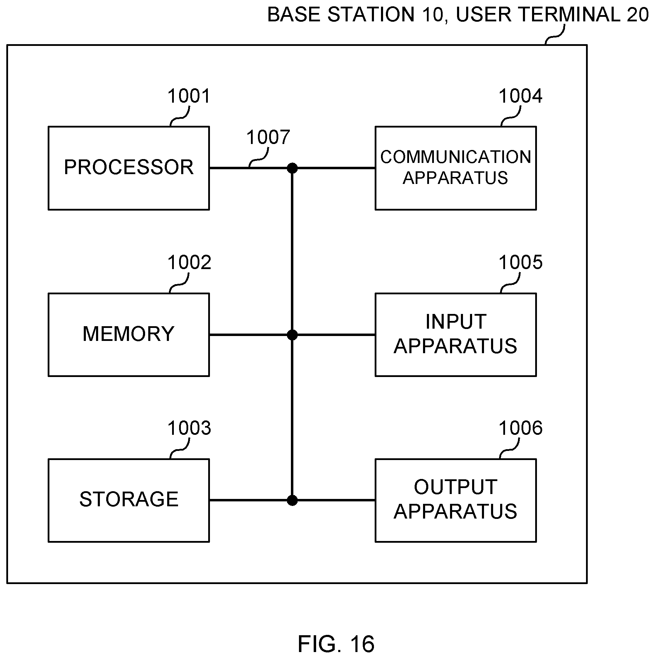

For example, a base station, a user terminal, and so on according to one embodiment of the present disclosure may function as a computer that executes the processes of the radio communication method of the present disclosure. FIG. 16 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be used interchangeably.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station", a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an autonomous car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

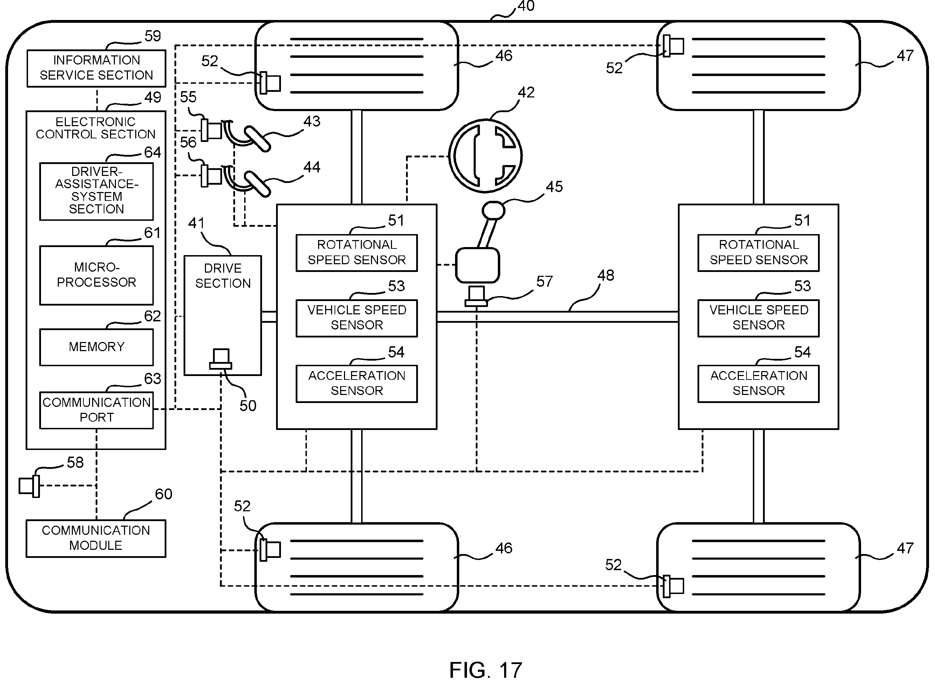

FIG. 17 is a diagram to show an example of a vehicle according to one embodiment. A vehicle 40 includes a drive section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various information such as driving information, traffic information, and entertainment information, such as a car navigation system, an audio system, a speaker, a display, a television, and a radio; and one or more ECUs that control these devices. The information service section 59 provides various information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driver-assistance-system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driver-assistance-system section 64 transmits and receives various information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the drive section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various information received from the external apparatus in the memory 62 that can be used by the microprocessor 61. Based on the information stored in the memory 62, the microprocessor 61 may control the drive section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

This application is based on and claims priority to Japanese Patent Application No. 2022-166494, filed on October 17, 2022, the contents of which are incorporated herein by reference in their entirety.

## Claims

1. A terminal comprising:
a receiving section that receives a configuration indicating whether a serving cell may become a candidate cell for layer 1/layer 2 (L1/L2) inter-cell mobility; and
a control section that controls switch of the serving cell, based on the configuration.

2. The terminal according to claim 1, wherein
the configuration is a configuration, for each cell group, indicating whether all the serving cells in a cell group may become the candidate cells for L1/L2 inter-cell mobility.

3. The terminal according to claim 1, wherein
the configuration is a configuration indicating whether each serving cell in a cell group may become the candidate cell for L1/L2 inter-cell mobility.

4. The terminal according to claim 1, wherein
the switch of the serving cell is that the serving cell to become the candidate cell is switched to a special cell (SpCell) or a secondary cell (SCell).

5. A radio communication method for a terminal, the radio communication method comprising:
receiving a configuration indicating whether a serving cell may become a candidate cell for layer 1/layer 2 (L1/L2) inter-cell mobility; and
controlling switch of the serving cell, based on the configuration.

6. A base station comprising:
a transmitting section that transmits a configuration indicating whether a serving cell may become a candidate cell for layer 1/layer 2 (L1/L2) inter-cell mobility; and
a control section that controls switch of the serving cell, based on the configuration.
